# EUROPÄISCHE PATENTSCHRIFT

(11) **EP 0 708 720 B1**
(45) Veröffentlichungstag und Bekanntmachung des Hinweises auf die Patenterteilung: **01.10.1997**
(21) Anmeldenummer: 94922235.0
(22) Anmeldetag: 12.07.1994
(51) Int. Cl.: B60T 8/36, B60T 8/48, F16K 31/06

(54) **VENTILANORDNUNG**
VALVE ARRANGEMENT
SYSTEME DE SOUPAPES

(30) Priorität: 21.07.1993 DE 4324533
(43) Veröffentlichungstag der Anmeldung: 01.05.1996
(73) Patentinhaber: LUCAS INDUSTRIES PUBLIC LIMITED COMPANY, Solihull, West Midlands B91 3TX (GB)
(72) Erfinder: LUBISCHER, Frank, D-56154 Boppard (DE); WALD, Thomas, D-56288 Hollnich (DE)
(74) Vertreter: Schmidt, Steffen J., Dipl.-Ing.
(86) Internationale Anmeldenummer: EP9402282
(87) Internationale Veröffentlichungsnummer: WO9503197

(56) Entgegenhaltungen:
- EP-A- 0 492 109
- DE-A- 2 036 110
- DE-A- 3 831 426
- DE-A- 3 832 023
- DE-A- 4 112 136
- GB-A- 1 004 134
- US-A- 4 596 273

## Beschreibung

Die vorliegende Erfindung betrifft eine Ventilanordnung, insbesondere für einen Fluidbremskreis mit Antischlupfregelung, mit den Merkmalen des Oberbegriffs des Anspruchs 1.

In der EP-0492109 A1 ist ein Sperrventil mit einem verbraucherseitigen Ventilsitz und einem druckerzeugerseitigen Schließglied beschrieben, das durch Magnetkraftwirkung auf einem Anker am Ventilsitz anzugreifen vermag. Zwischen dem Anker und dem Schließglied ist eine Druckfeder angeordnet. Diese übt in der Ventilschließstellung eine auf den Ansprechdruck abgestimmte Schließkraft auf das Schließglied aus. Auf diese Weise ist in der Ventileinheit ein Absperrventil und ein Druckbegrenzungsventil verwirklicht.

Aus der DE-38 32 023 ist bekannt, gegenparallel zu einem ASR-Umschaltmagnetvenil Rückschlagventile mit unterschiedlicher Vorspannung als Sicherheitsventile vorzusehen. Allerdings sind diese Rückschlagventile als separate Baugruppen ausgeführt.

Aus der DE 35 06 287 A1 ist ein Elektroventil zur Steuerung von Antiblockiervorrichtungen in Kraftfahrzeugen bekannt, das den Druckabfall in der Betätigungsvorrichtung steuert, durch den ein blockiertes Rad des Fahrzeugs gelöst wird, so daß die verlorene Bodenhaftung wieder hergestellt wird. Dazu weist das Elektroventil eine mit dem Steuerkreis zur Steuerung der Kraftfahrzeugbremsen zu verbindende Eingangsöffnung, eine mit einer Betätigungsvorrichtung der zugeordneten Bremse zu verbindende Ausgangsöffnung und eine mit einem Ablaufbehälter verbundene Ablauföffnung auf. Ein Ventilschieberorgan dient zur wahlweisen Verbindung der Ausgangsöffnung mit der Eingangsöffnung und der Ablauföffnung. Das Ventilschieberorgan, das durch elastische Mittel in diejenige Position vorgespannt ist, in der die Ausgangsöffnung mit der Eingangsöffnung in Verbindung steht, läßt sich durch einen Elektromagneten gegen die Wirkung der elastischen Mittel in diejenige Position bewegen, in der die Ausgangsöffnung mit der Ablauföffnung verbunden ist. Im Bereich der Ablauföffnung ist ein Rückschlagventil angeordnet, welches bewirkt, daß das Fluid nur dann ablaufen kann, wenn sein Druck über einem vorbestimmten Schwellenwert liegt.

Aus der DE 16 50 574 A1 ist ein elektromagnetisch betätigbares Miniaturventil mit einem Magnetsystem, das einen Radial- und einen Axialluftspalt hat, und dessen Ventilglied bei erregtem Magnetsystem auf einem Ventilsitz aufliegt und dadurch dessen Fluidströmungsweg sperrt. Bei diesem Ventil verläuft bei entregtem Magnetsystem der Fluidströmungsweg vom Ventilsitz aus durch den magnetischen Axialluftspalt und dann vom Anker abgewendet durch das Ventilgehäuse nach außen. Damit befindet sich der Anker in einem fluidströmungstoten Raum, da die Fluidströmung die magnetischen Feldlinien einmal im Axialluftspalt und einmal beim Durchtritt durch das Gehäuse schneidet.

Aus der die Merkmale des Oberbegriffes des Anspruchs 1 aufweisenden DE 38 31 426 A1 ist eine Bremssteuervorrichtung für Fahrzeuge bekannt, bei der eine TRC-Druckreduzierstufe vorgesehen ist. Diese dient dazu einen unerwünschten Druckanstieg und somit ein Ausfallen des Hydraulikkreises zu verhindern. In dem Hydraulikkreis befindet sich ein TRC-Wechselventil, das eine Entlastungscharakteristik aufweist, mit der der Druck zur Seite des Hauptbremszylinders hin abgebaut werden kann. Nachteilig beim TRC-Wechselventil is anzusehen, daß die freien Durchmesser der zweiten und dritten Fluidanschluß gleich groß sind. Durch den verhältnismäßig kleinen freien Durchmesser des dritten Fluidanschlußes ist der Ansaugwiderstand der Pumpe im Antischlupfbetrieb, was insbesondere bei kallem Betriebsfluid, das Ansprechverhalten beeinträchtigt.

Aus der GB 1004134 A1 ist ein elektromagnetisch betätigtes Fluidströmungssteuerventil bekannt, bei dem kegelstumpfförmige Ventilglieder in entsprechend geformte Ventilsitze eingreifen können, um Fluiddurchlässe zu sperren oder zu öffnen. In diesem Dokument ist keine Möglichkeit beschrieben, wie das dort gezeigte Ventil mit einer Überdruckbegrenzungsfunktion ausgestattet werden könnte.

Aus der US 4,596,273 ist ein Doppelsitz-Elektromagnetventil bekannt, bei dem das Ventilglied dazu eingerichtet ist, normalerweise einen ersten Ventilsitz zu schließen, wodurch ein erster Fluidanschluß geschlossen und ein zweiter Fluidanschluß mit einem dritten Ventilanschluß verbunden ist. In einer zweiten Stellung kann das Ventilglied einen zweiten Ventilsitz schließen, in der der zweite Fluidanschluß geschlossen und der erste und der dritte Fluidanschluß miteinander verbunden sind. Eine Ventilfeder drängt das Ventilglied ständig entweder gegen den ersten oder gegen den zweiten Ventilsitz. Ein Elektromagnet verschiebt das Ventilglied über einen Stößel gegen die Kraft der Ventilfeder zwischen dem ersten und dem zweiten Ventilsitz.

Aus der DE 20 36 110 A1 ist ein schnellschaltendes Magnetsystem für Magnetventile bekannt, bei der zur Verkleinerung der Schaltzeiten der Eisenquerschnitt des Ankers durch Bohrungen in Bewegungsrichtung oder durch unmagnetische Zwischenlagen zwischen die Ankerbleche verkleinert ist, während die Außenmaße des Ankers möglichst groß und gleich dem Gegenpol sind. Damit ist die Ankermasse halbiert.

Aus der DE-4112136 A1 ist eine Baueinheit aus einem Druckbegrenzungsventil und einem Umschaltventil für eine hydraulische Bremsanlage mit einer Blockierschutz- und Antriebsschlupfregeleinrichtung bekannt. Die Baueinheit hat ein aus einem Gehäusemantel mit einer darin aufgenommenen Spule gebildetes Führungsrohr für einen darin längs bewegbar aufgenommenen Anker. Das Führungsrohr ist an beiden Enden durch jeweilige Jochteile abgeschlossen. Das erste Jochteil weist einen ersten Anschluß des Umschaltventils auf. Dieser außermittig angeordnete Anschluß steht mit dem Innenraum des Führungsrohres in Verbindung. Darüber hinaus weist das erste Jochteil den koaxial zur Längsachse des Führungsrohres verlaufenden dritten Anschluß des Umschaltventils auf. Dieser dritte Anschluß endet in einem ersten Ventilsitz. Das zweite Jochteil ist mittig mit dem zweiten Anschluß des Umschaltventils versehen. Dieser zweite Anschluß führt im Innern zu einem zweiten Ventilsitz.

Der Anker des Umschaltventils ist rohrförmig ausgebildet und weist auf der Seite des zweiten Jochteils einen Innenbund auf. An diesem Innenbund ist eine als Schraubendruckfeder ausgebildete Rückstellfeder abgestützt, welche an dem zweiten Jochteil angreift. Im Anker sind zwei für Druckmittel durchlässige Scheiben aufgenommen, zwischen denen sich eine als Schraubendruckfeder ausgebildete koaxial zur Längsachse verlaufende Feder befindet. Die Feder ist einer Vorspannkraft unterworfen, aufgrund der die erste Scheibe an einem in den Anker eingefügten Anschlagring und die zweite Scheibe am Innenbund abgestützt ist. Auf der Seite des ersten Jochteils ist an der ersten Scheibe eine als erstes Schließglied dienende Kugel befestigt. Das erste Schließglied bildet im Zusammenwirken mit dem Ventilsitz des ersten Jochteils ein erstes Sitzventil des Umschaltventils. An der zweiten Scheibe des Ankers ist auf der Seite des zweiten Jochteils gleichfalls eine Kugel als zweites Schließglied angeordnet. Das Schließglied bildet im Zusammenwirken mit dem Ventilsitz des zweiten Jochteils ein Sitzventil sowohl des Umschaltventils als auch des Druckbegrenzungsventils.

Diese Anordnung weist relativ viele Teile auf und ist kompliziert herzustellen.

Aufgabe der Erfindung ist die Beseitigung der Nachteile des Standes der Technik unter Beibehaltung einer guten Funktionstüchtigkeit.

Zur Lösung dieser Aufgabe ist die eingangs genannte Ventilanordnung durch die Merkmale des kennzeichnenden Teils des Anspruchs 1 weitergebildet.

Bei einem derartigen Ventil wird bei Überschreiten eines Grenzdrucks die Schließkraft überwunden und das Ventil öffnet sich, so daß eine weitere Drucksteigerung nicht möglich ist. Bevor der Grenzdruck erreicht ist, ist die Pumpendruckseite gegenüber dem ersten Ventilanschluß gesperrt.

In einem Fluidbremskreis mit einer Antriebsschlupfregelung (ASR oder TC) wird in einer Beschleunigungsphase des Fahrzeugs unabhängig vom Bremspedaldruck ein Bremsdruck aufgebaut, durch den das durchdrehende Fahrzeugrad abgebremst wird. Auf diese Weise erfolgt eine Verbesserung der Drehmomentverteilung über das Differentialgetriebe. Dies hat eine Erhöhung der maximal übertragbaren Antriebsmomente in Abhängigkeit vom Rad-Fahrbahn-Kontakt auf die Fahrbahn zur Folge.

Die dazu notwendigen Fluiddrücke werden von der integrierten ABS-Pumpe aufgebaut und dem Fluidbremskreis zugeführt. Die benötigten Drücke zur Anpassung der Drehmomente der Räder liegen vorzugsweise bei maximal 60 bar. Da die Pumpe jedoch in der Lage ist, einen gegenüber dem Maximaldruck von 60 bar erheblich höheren Druck zu liefern, ist es sinnvoll, den Drucküberschuß im TC-Fall durch eine entsprechende Vorrichtung zu begrenzen.

Das heißt, daß der ASR-, TC-Druck bis zu einem bestimmten Maß (etwa 60 bar) verfügbar sein muß, also nicht über den Hauptbremszylinder abgebaut werden darf. Zum anderen soll das von der Pumpe darüber hinaus erzeugte überschüssige Fluidvolumen in ein geeignetes Reservoir abgeleitet werden.

Zur Verringerung des erforderten Bauraumes und zur vereinfachten Montage ist erfindungsgemäß eine Kombination der beiden Ventilfunktionen, maximale Druckbegrenzung und Absperren des Hauptbremszylinders, in einer einzigen Ventilanordnung vorgesehen.

Vorteilhafte Ausgestaltungen der Ventilanordnung sowie ein hydraulisches Fahrzeugbremssystem, in dem die erfindungsgemäße Ventilanordnung vorgesehen ist, sind Gegenstand weiterer Ansprüche.

Ein bevorzugtes Ausführungsbeispiel einer erfindungsgemäßen Ventilanordnung und einen Fluidbremskreis mit der erfindungsgemäßen Ventilanordnung sind in der nachstehenden Beschreibung unter Bezugnahme auf die Zeichnungen näher erläutert.

Es zeigen
- Fig. 1: einen Fluidbremskreis mit Rad-Antiblockiersystem und einer Rad-Antischlupfregelung in einem schematischen Anschlußplan;
- Fig. 2: eine Ventilanordnung gemäß der Erfindung in einer schematischen Querschnittsdarstellung;
- Fig. 3: ein Diagramm, in dem die Magnetkraft einer Elektromagnetanordnung gegenüber der Breite des Luftspaltes aufgetragen ist;
- Fig. 4: ein Diagramm, in der die Flußdichte in einer Elektromagnetanordnung gegenüber der Feldstärke aufgetragen ist; und
- Fig. 5: eine weitere Ausführungsform der Ventilanordnung, bei der der Anker des Elektromagneten stufenförmig ausgestaltet ist.

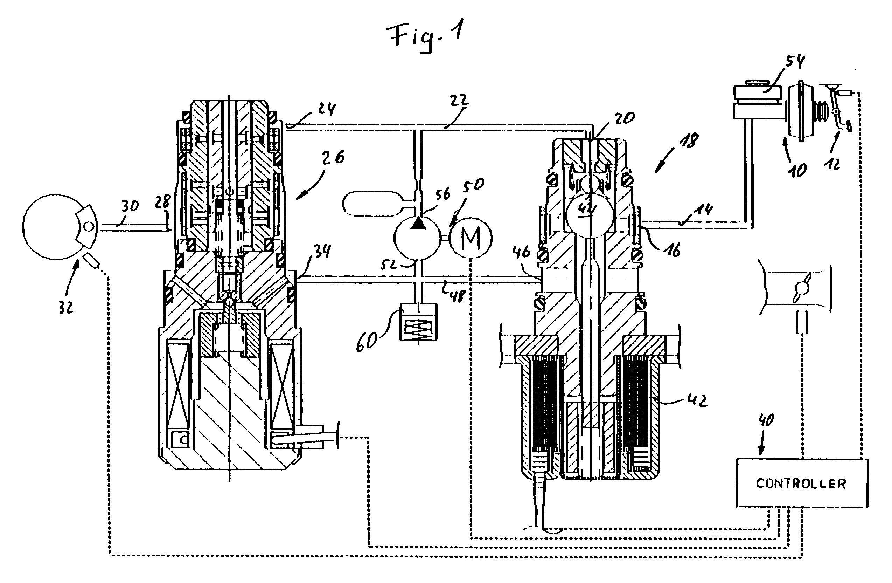

Fig. 1 zeigt ein hydraulisches Fahrzeugbremssystem mit einem Rad-Antiblockiersystem und einer Rad-Antischlupfregelung. Dabei ist ein Hauptbremszylinder 10 durch ein Pedal 12 betätigbar und von dem Hauptbremszylinder 10 führt eine Fluidleitung 14 zu einem ersten Fluidanschluß 16 einer Ventilanordnung 18, die als Dreiwegemagnetventil ausgestaltet ist. Von dem ersten Fluidanschluß 16 führt im unbetätigten Zustand der Ventilanordnung 18 eine Strömungsverbindung zu einem zweiten Fluidanschluß 20, von wo aus eine Fluidleitung 22 zu einem ersten Fluidanschluß 24 eines Druckminderungs-Elektroventils 26 führt. Im unbetätigten Zustand des Druckminderungs-Elektroventils 26 besteht eine Strömungsverbindung zu einem dritten Fluidanschluß 28 des Druckminderungs-Elektroventils 26, von wo aus eine Fluidleitung 30 zu einer Radbremse 32 führt.

Der vorstehend beschriebene Fluidströmungsweg stellt im Normalfall die direkte Druckverbindung zwischen dem Hauptbremszylinder 10 und der Radbremse 32 dar.

Wenn ein Antischlupfregelungs-Fall auftritt, schaltet eine ABS-ASR-Steuerung 40 die Ventilanordnung 18 ein, d.h. dessen Elektromagnetanordnung 42 wird angesteuert und ein Ventilglied 44 wird verschoben, so daß der erste und der zweite Fluidanschluß 14, 20 nicht mehr in Strömungsverbindung stehen, sondern eine Strömungsverbindung zwischen dem ersten Fluidanschluß 14 und einem dritten Fluidanschluß 46 entsteht. Dadurch ist die direkte Verbindung zwischen dem Hauptbremszylinder 10 und der Radbremse 32 unterbrochen, und der Hauptbremszylinder 10 steht nun über die Fluidleitung 14, den ersten Fluidanschluß 16 und den dritten Fluidanschluß der Ventilanordnung 18 über eine Fluidleitung 48 mit einer Pumpe 50 bzw. deren Sauganschluß 52 in Verbindung.

Die im ASR-Fall gleichzeitig mit der Ventilanordnung 80 aktivierte Pumpe 50 kann nun über die Ventilanordnung 18 auf dem vorstehend beschriebenen Weg Fluid aus einem über dem Hauptbremszylinder 10 angebrachten Fluidtank 54 durch den geöffneten unbetätigten Hauptbremszylinder 10 ansaugen und am Pumpenausgang 56 bzw. in der Fluidleitung 22 Fluiddruck aufbauen. Der Fluiddruck steigt dann sowohl an dem ersten Fluidanschluß 24 des ersten Druckminderungs-Elektroventils 26, als auch an dem zweiten Fluidanschluß der Ventilanordnung 18 an. Dem Druckanstieg am zweiten Fluidanschluß 20 der Ventilanordnung 18 steht als Schließkraft die Axialkomponente der durch die Elektromagnetanordnung 42 erzeugten Magnetkraft entgegen. Aufgrund der vorliegenden Druck- und Flächenverhältnisse in der Ventilanordnung 18 ergibt sich ein maximal möglicher Druck in der Fluidleitung 22 von etwa 60 bar. Wird dieser überschritten, gibt das Ventilglied 42 den zweiten Fluidanschluß 20 frei, so daß das Überdruck-Fluid sowohl über den ersten Fluidanschluß 16 in den Hauptbremszylinder 10 bzw. den darüber angeordneten Fluidtank 8, als auch über den dritten Fluidanschluß 46 und die Fluidleitung 48 in einen Expander 60 entweichen kann. Die Bemessung der einzelnen Komponenten wird weiter unten erläutert.

Auf diese Weise wird der maximal mögliche Druck in der Fluidleitung 22 wirksam begrenzt.

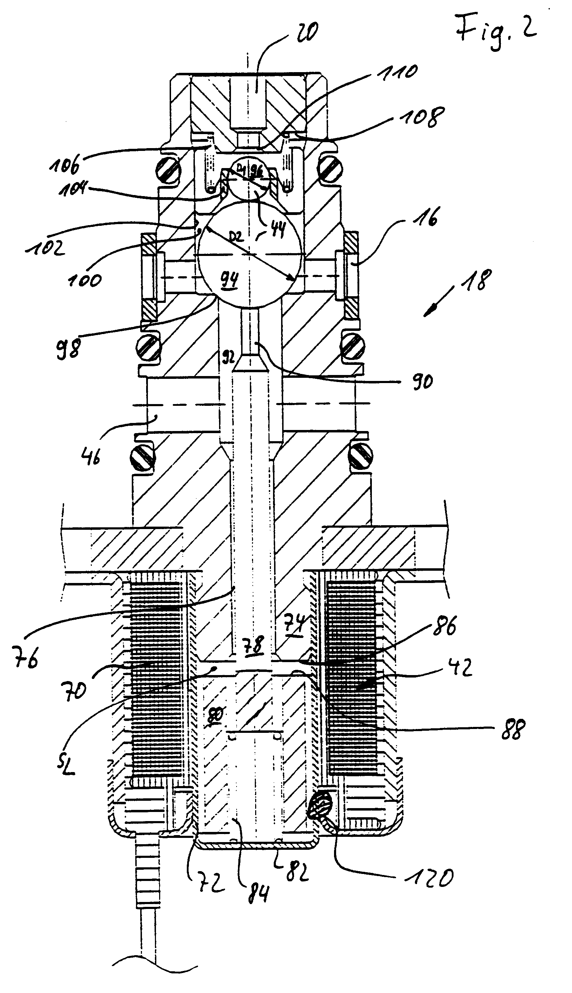

Fig. 2 zeigt eine vergrößerte Darstellung der Ventilanordnung 18, dabei sind vorstehend bereits erwähnte Teile der Ventilanordnung mit den gleichen Bezugszeichen wie in Fig. 1 versehen und nicht nochmals erläutert.

Die Ventilanordnung 18 weist eine im wesentlichen zylindrische Gestalt auf, wobei an einer Stirnfläche (in Fig. 2 oben) der zweite Fluidanschluß 20 mündet, während der erste Fluidanschluß 16 und der Fluidanschluß 46 radial in unterschiedlicher Höhe an der Außenwand der Ventilanordnung 18 münden.

Die Elektromagnetanordnung 42 ist dem zweiten Fluidanschluß 20 gegenüberliegend (am unteren Ende der Ventilanordnung 18 in Fig. 2) angeordnet.

Die Elektromagnetanordnung 42 weist eine Erregerspule auf, die in einem Eisenmantel 72 aufgenommen ist. Die Erregerwicklung 70 ist dabei als Topfspule ausgestaltet, in deren zylindrischer Ausnehmung etwa bis zur Hälfte ein Eisenkern 74 mit einer koaxialen Durchgangsbohrung 76 ragt. In der Durchgangsbohrung 76 ist ein koaxial verschieblicher Tauchanker 78 aufgenommen, der sich an seinem in das Innere der Topfspule 70 reichenden Ende auf den Innendurchmesser der Topfspule 70 durch einen im wesentlichen hohlzylindrischen Eisenkörper 80 verbreitert. Gegen das Bodenblech 82 der Ventilanordnung ist der Tauchanker 78 durch eine im Innern des hohlzylindrischen Körpers 80 angeordnete Schraubenfeder 84 abgestützt.

Zwischen der Stirnfläche 86 des in das Innere der Topfspule 70 ragenden Eisenkerns 74 und der ihr gegenüberliegenden Stirnfläche 88 des hohlzylindrischen Körpers 80 ist ein in seiner Höhe veränderbarer Luftspalt s_{L} ausgebildet.

Der die Durchgangsbohrung 76 durchragende Tauchanker 78 ragt an seinem von der Elektromagnetanordnung 42 abliegenden Ende 90 in einen Ventilraum 92. Das Ende 90 des Tauchankers 78 steht mit dem Ventilglied 44 in Berührung, das aus zwei Kugeln 94 und 96 mit unterschiedlichem Durchmesser gebildet ist.

In der (gezeigten) Ruhestellung der Ventilanordnung 18 ruht die Kugel 94 mit dem größeren Durchmesser auf einem Ventilsitz 98, so daß der erste Fluidanschluß 16 von dem dritten Ventilanschluß 46 strömungsmäßig getrennt ist. Die Kugel 94 ist in einem im wesentlichen hohlzylindrischen Ventilraum 100 aufgenommen, dessen Durchmesser so gewählt ist, daß zwischen der Oberfläche der Kugel 94 und der Wandung 102 des Ventilraumes 100 ein Ringspalt freibleibt, durch den Fluid von dem ersten Fluidanschluß 16 zu dem zweiten Fluidanschluß 20 strömen kann.

Koaxial zu dem Tauchanker 78 und der Kugel 94 mit dem größeren Durchmesser ist die Kugel 96 mit dem kleineren Durchmesser angeordnet, die direkt auf der Kugel 94 mit dem größeren Durchmesser ruht. Die Kugel 96 mit dem kleineren Durchmesser ist in einem Käfig 104 gefangen, der durch eine Schraubenfeder 106 gegen die obere innere Stirnwand 108 der Ventilanordnung 18 abgestützt wird. In koaxialer Ausrichtung zu den beiden Kugeln 94, 96 ist in der Stirnwand 108 der zweite Fluidanschluß 20 mit einem Ventilsitz 110 ausgebildet, wobei die Kugel 96 mit dem kleineren Durchmesser in der (gezeigten) Ruhestellung der Ventilanordnung 18 von dem Ventilsitz 110 abgehoben ist, so daß eine durchgehende Strömungsverbindung zwischen dem ersten Fluidanschluß 16 und dem zweiten Fluidanschluß 20 gegeben ist.

Durch die Schraubenfeder 106 ist die Kugel 96 mit dem kleineren Durchmesser in Anlage an die Kugel 94 mit dem größeren Durchmesser gepreßt, so daß eine definierte Ventilöffnung im Bereich des zweiten Fluidanschlusses gegeben ist.

Zur definierten Einstellung der Schließ- bzw. Haltekräfte bei erregter Elektromagnetanordnung 42, wobei Temperatur- und Spannungsschwankungen nach Möglichkeit eliminiert sein sollen, dienen nachfolgende Bemessungsregeln.

Da eine Stromregelung des Betätigungssignals der Elektromagnetanordnung 42 nicht vorgesehen ist, kann ein Proportionalmagnet nicht verwendet werden. Die Einstellung der Magnetkräfte kann damit nur über den Luftspalt s_{L}, und/oder eine definierte Materialauswahl bzw. geometrische Auslegung erreicht werden.

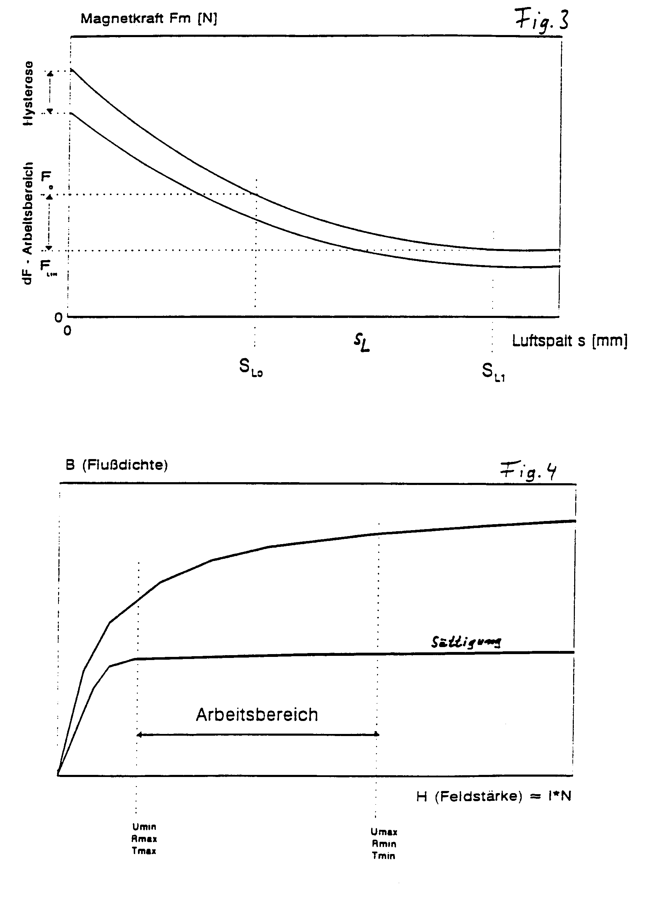

In den Fig. 3 und 4 ist die Abhängigkeit der Magnetkraft Fm über der Höhe des Luftspaltes s_{L} bzw. die Flußdichte B über der Feldstärke H aufgetragen.

Wie in Fig. 3 gezeigt, steigt ab einem Grenzluftspalt s_{L} < s_{L0} die Magnetkraft überproportional an. Dies bedeutet, daß in dem Bereich 0...s_{L0} schon sehr kleine Spaltänderungen zu einem überproportionalen Anstieg der Magnetkräfte führen und somit die Spalttoleranzen zur Einstellung entsprechend eng sein müssen.

Um die Einstelltoleranzen zu vergrößern, wird nun vorgeschlagen, den Bereich des Luftspaltes s_{L} zu verwenden, in dem eine konstante oder zumindest nur geringfügig anwachsende Änderung der Magnetkraft (s_{L0} < s_{L} < s_{L1}) als Spaltenmaß verwendet wird. In diesem Abschnitt der Kurve haben Schwankungen des Luftspaltes (Toleranz) einen geringen Einfluß auf die ausgeübten Magnetkräfte.

Um die Temperatur- und Spannungsempfindlichkeit der Elektromagnetanordnung 42 in der Ventilanordnung zu verringern, wird auf das Diagramm in Fig. 4 Bezug genommen.

Die Temperatur- und Spannungsunempfindlichkeit kann durch eine Sättigung des Magnetkreises erreicht werden. In einem Magnetkreis ist der magnetische Fluß (Produkt aus Feldstärke und Fläche) überall konstant. Daher kann man durch die Einbringung eines Materials, das den magnetischen Fluß leitet, an beliebiger Stelle in dem magnetischen Kreis, z.B. an der mit dem Bezugszeichen 120 bezeichneten Stelle in Fig. 2, den Magnetkreis sättigen.

Ist der Magnetkreis gesättigt, stellt sich ein Funktionsverlauf der magnetischen Induktion B über der magnetischen Erregung H (I) gemäß Fig. 4 ein. Wird die Elektromagnetanordnung 42 in dem im wesentlichen konstanten Bereich in Fig. 4 betrieben, kann der Temperatureinfluß fast vollständig eliminiert werden, da der Magnetkreis hier immer gesättigt ist. Der untere Arbeitsbereich ergibt sich dabei aus der minimalen Spannung (Uₘᵢₙ), dem maximalen Widerstand (Rₘₐₓ) und der maximalen Temperatur (Tₘₐₓ). Der obere Arbeitsbereich ergibt sich entsprechend aus der maximalen Spannung (Uₘₐₓ), dem minimalen Widerstand (Rₘᵢₙ) und der minimalen Temperatur (Tₘᵢₙ).

Mit diesen Angaben kann unter Berücksichtigung der Federkräfte der Federn 84 und 104 sowie den Abmessungen der Ventilsitze 98 und 110 der Ansprechpunkt der Ventilanordnung 18 festgelegt werden, bei dem die von der Elektromagnetanordnung 41 bewirkte Verschiebung des Ventilgliedes 44 durch einen an dem zweiten Fluidanschluß 20 herrschenden Druck soweit überwunden ist, daß die Kugel 96 mit dem kleineren Durchmesser von ihrem Ventilsitz weggedrückt wird, während die Kugel 94 mit dem größeren Durchmesser ihren Ventilsitz 98 noch nicht wieder vollständig erreicht hat, so daß die Ventilkammern 92 und 100 und damit alle drei Fluidanschlüsse 16, 20 und 46 der Ventilanordnung 18 in Strömungsverbindung stehen.

Im Hinblick auf das hydraulische Fahrzeugbremssystem nach Fig. 1 ergibt sich dann folgende Situation.

Im stromlosen Zustand der Elektromagnetanordnung 42 ist das Ventilglied 44 im Normalbrems- und Antiblockierbremszustand. Die Schraubenfeder 106 hält die beiden Kugeln 94 und 96 und den Tauchanker 78 in der Ruhestellung, in der die Kugel 94 mit dem größeren Durchmesser an ihrem Ventilsitz 98 aufsitzt und die Kugel 96 mit dem kleineren Durchmesser den Ventilsitz 110 freigibt. Damit ist eine Strömungsverbindung zwischen dem ersten Fluidanschluß 16 und dem zweiten Fluidanschluß 20 vorhanden und der Hauptbremszylinder 10 über das Ventil 26 mit der Bremse 32 verbunden, während der Fluidanschluß 46 zu dem Fluid-Expander 60 und der Fluidpumpe 50 Verschlossen ist.

Wenn die Erregerspule 70 mit Strom beaufschlagt wird, (Antischlupfregelfall), wird über die Elektromagnetanordnung 42 am Anker 78 eine Axialkraft erzeugt. Diese ist in der Lage, die beiden Kugeln 94 und 96 gegen die Kraft der Schraubenfeder 106 zu verschieben, so daß die Kugel 96 mit dem kleineren Durchmesser an ihrem Ventilsitz 110 zur Anlage kommt, während die Kugel 94 mit dem größeren Durchmesser von ihrem Ventilsitz 98 abhebt. Dadurch wird die Verbindung von dem Hauptbremszylinder 10 zur Pumpe 50 freigegeben. Dann kann die Pumpe 50 aus dem Fluidtank 54 über dem Hauptbremszylinder 10 Fluid ansaugen und in die Fluidleitung 22 pumpen, wodurch sich der Druck am Fluidanschluß 20 erhöht. Dieser am Fluidanschluß 20 anstehende Druck erzeugt eine hydraulische Gegenkraft, die die Kugel 96 mit dem kleineren Durchmesser gegen die Kraft der Elektromagnetanordnung 42 von ihrem Ventilsitz 110 abzuheben bestrebt ist.

Aufgrund der Ventilflächendimensionierung, den Federkäften und den Magnetkräften reicht die hydraulische Kraft am Fluidanschluß 20 ab einem bestimmten Maß aus, um die Kugel 96 mit dem kleineren Durchmesser von ihrem Ventilsitz 110 abzuheben. Sobald dies eintritt, strömt solange Fluid zu den ersten und dritten Fluidanschlüssen 16, 46 und wird von der Pumpe 50 angesaugt, bis der Überdruck abgebaut ist. Der Druck am zweiten Fluidanschluß 20 bricht dabei sofort zusammen und die Magnetkraft kann den Ventilsitz 110 wieder schließen. Dieser Öffnungs- und Schließvorgang wiederholt sich nun fortlaufend in einer Art "Shuttle-Bewegung".

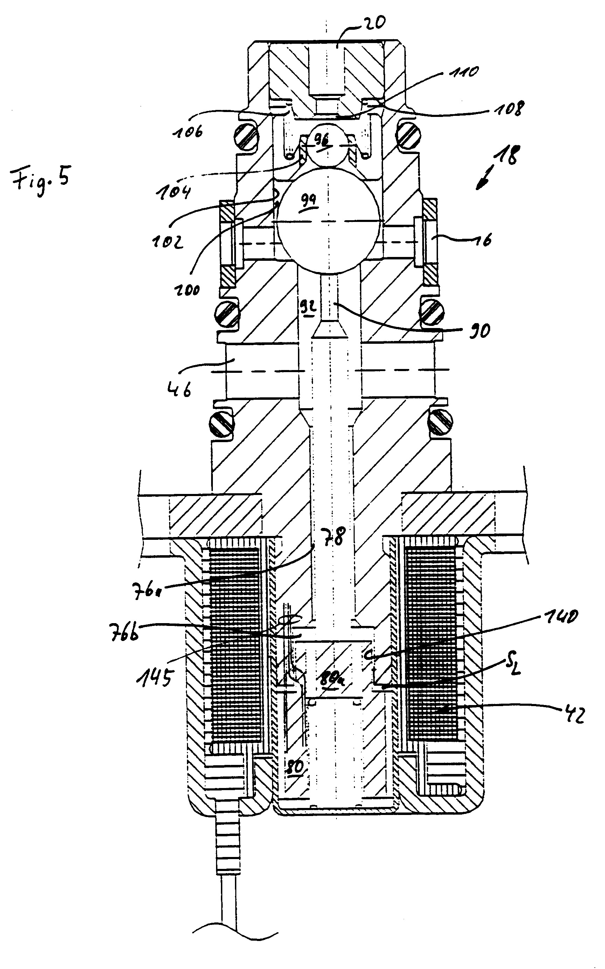

Auf diese Weise ist der Druck in der Fluidleitung 22 auf einen voreinstellbaren Wert begrenzbar. Ein weiterer Parameter, um die durch die Elektromagnetanordnung 42 erzeugbaren Kräfte einzustellen, ist in der Fig. 5 veranschaulicht. Hierbei wird der Effekt der sogenannten Magnetkraftscherung ausgenutzt. Dabei werden Magnetkräfte nicht nur in axialer Richtung des Tauchankers wirksam, sondern auch quer dazu. Sobald der Tauchanker in den Scherungsbereich eintaucht, wird die axiale Kraftkomponente um die dann erzeugte Querkraft verringert.

Wie in Fig. 5 veranschaulicht, ist die Durchgangsbohrung 76 als Stufenbohrung 76a, 76b ausgeführt. In entsprechender Weise ist der an dem Tauchanker 78 angeformte hohlzylindrische Teil an seinem in das Innere der Erregerspule 70 weisenden Seite mit einer Stufe 140 versehen, so daß ein verjüngter Bereich 80a in den Bereich 76b der Stufenbohrung eintauchen kann.

Beim Eintauchen baut sich ein Teil des magnetischen Flusses in Querrichtung auf und leistet keinen Beitrag zur Schließkraft des Ventiles. Das heißt, der Querkraftaufbau verringert die zum Geschlossenhalten des Ventils zur Verfügung stehende Kraft in vorherbestimmbarer Weise. Die mit dem Bezugszeichen 145 versehenen Feldlinien spalten sich so auf, daß der progressiv ansteigende Bereich des Magnetkraftverlaufes wesentlich abgeschwächt werden kann, so daß die Magnetkraftänderungsfunktion über den Luftspalt in einen Bereich relativer Konstanz verlagert wird, der nahezu unabhängig von der Maßtoleranz des Luftspaltes ist.

Darüber hinaus wird durch die gestufte Ausführung des Eisenkerns 74 und des Tauchankers 78 mit seinem zylindrischen Ansatz 80, 80a die Querschnittsfläche des Luftspaltes verringert, wodurch eine Sättigung des Magnetkreises bei niedrigeren Strömen möglich wird. Damit reduziert sich die Erwärmung der Elektromagnetanordnung 42. Auch diese Maßnahme wirkt im Sinne einer Verringerung der Temperaturempfindlichkeit.

## Patentansprüche

1. Ventilanordnung, insbesondere für einen Fluidbremskreis mit Antischlupfregelung, mit
- einem ersten, einem zweiten und einem dritten Fluidanschluss (16, 20, 46) mit jeweiligen vorherbestimmten Strömungsquerschnitten,
- wenigstens einem Ventilglied (44, 94, 96), das durch eine erste Federanordnung (106) in eine erste Stellung vorgespannt ist, in der der erste und der zweite Fluidanschluss (16, 20) in Strömungsverbindung stehen und der dritte Fluidanschluss (46) gesperrt ist, und
- einer eine Elektromagnetanordnung (42) aufweisende Ventilbetätigungseinrichtung (42, 78), durch die das Ventilglied (44, 94, 96) bewegbar ist, um dieses in eine zweite Stellung zu bringen, in der der erste und der dritte Fluidanschluss (16, 46) in Strömungsverbindung stehen und der zweite Fluidanschluss (20) gesperrt ist,
wobei in der zweiten Stellung des Ventilglieds (44, 94, 96)
- die von der ersten Federanordnung (106) auf das Ventilglied (44, 94, 96) ausgeübte Vorspannung und
- die Strömungsquerschnitte der Fluidanschlüsse (16, 20, 46) so bemessen sind, sowie
- die durch die Ventilbetätigungseinrichtung auf das Ventilglied einstellbar ausgeübte elektromagnetische Kraft so bestimmt ist,
- daß bei einem vorbestimmten Fluiddruck an dem zweiten Fluidanschluss (20) das Ventilglied (44) den zweiten Fluidanschluss (20) soweit öffnet, daß eine Strömungsverbindung zu dem ersten und dritten Fluidanschluss (16, 46) entsteht, dadurch gekennzeichnet, daß
das Ventilglied durch zwei Kugeln (94, 96) unterschiedlichen Durchmessers (D1, D2) gebildet ist, der zweite Fluidanschluß (20) mit einem Ventilsitz (110) der kleineren Kugel (96), und der dritte Fluidanschluß (46) mit einem Ventilsitz (98) der größeren Kugel (94) fluidisch verbunden ist;
der Ventilsitz (98) der Kugel (94) mit dem größeren Durchmesser (D2) einen größeren freien Durchmesser aufweist als der Ventilsitz (110) der Kugel (96) mit dem kleineren Durchmesser (D1), und
die Ventilbetätigungseinrichtung (42, 78) und die beiden Kugeln (94, 96) koaxial zueinander ausgerichtet sind.

2. Ventilanordnung nach Anspruch 1, dadurch gekennzeichnet, daß die Elektromagnetanordnung (42) durch wenigstens eine Erregerwicklung (70) gebildet ist, die mit einem Eisenkern (74) verbunden ist, der über einen veränderlichen Luftspalt s_{L} mit einem Ankerelement (78, 80) zusammenwirkt, durch das das Ventilglied (44) bewegbar ist.

3. Ventilanordnung nach Anspruch 2, dadurch gekennzeichnet, daß bei der Erregung der Elektromagnetanordnung (42) die Veränderung des Luftspaltes s_{L} in einem Bereich erfolgt, in dem sich die erzeugte Magnetkraft zumindest annähernd linear ändert.

4. Ventilanordnung nach einem der vorhergehenden Ansprüche, dadurch gekennzeichnet, daß die Elektromagnetanordnung (42) in der magnetischen Sättigung betreibbar ist.

5. Ventilanordnung nach Anspruch 2, dadurch gekennzeichnet, daß der Luftspalt s_{L} der Elektromagnetanordnung (42) zumindest abschnittsweise eine stufenförmige Querschnittsgestalt aufweist.

6. Ventilanordnung nach einem der vorhergehenden Ansprüche, dadurch gekennzeichnet, daß die federnde Vorspannung des Ventilglieds (44), die durch die Ventilbetätigungseinrichtung (42) auf das Ventilglied (44) ausübbare Kraft und die Strömungsquerschnitte der Fluidanschlüsse (16, 20, 46) so bemessen sind, daß in der zweiten Stellung des Ventilglieds bei einer Druckdifferenz von etwa 60 bar zwischen dem zweiten (20) und dem ersten oder dritten Fluidanschluß (16, 46) eine Strömungsverbindung zu dem ersten und dem dritten Fluidanschluß (16, 46) entsteht.

7. Ventilanordnung nach dem vorhergehenden Anspruch, dadurch gekennzeichnet, daß an der Kugel (94) mit dem größeren Durchmesser D2 die Ventilbetätigungseinrichtung (42, 78) angreift.

8. Ventilanordnung nach einem der vorhergehenden Ansprüche, dadurch gekennzeichnet, daß die Ventilbetätigungseinrichtung (42) als Topfspule (79) mit Eisenkern (74) und einem Tauchanker (78, 80) ausgebildet ist.

9. Ventilanordnung nach einem der vorhergehenden Ansprüche, dadurch gekennzeichnet, daS die Ventilbetätigungseinrichtung (42, 78) durch eine zweite Federanordnung (84) in Richtung der zweiten Stellung des Ventilgliedes (44) vorgespannt ist, wobei die Federkräfte der beiden Federanordnungen (106, 84) so bemessen sind, daß bei unerregter Ventilbetätigungseinrichtung die Kugel (94) mit dem größeren Durchmesser D2 nicht von ihrem Ventilsitz (98) abhebt.

10. Hydraulisches Fahrzeugbremssystem mit einem Rad-Antiblockiersystem (ABS) und einer Rad-Antischlupfregelung (ASR), mit
- einem durch ein Pedal (12) betätigbaren Hauptbremszylinder (10),
- wenigstens einer Radbremse (32) und einem Druckminderungs-Elektroventil (26), über das der Hauptbremszylinder (10) im Normalzustand mit der Radbremse (32) in Verbindung steht, und eine ABS-gesteuerte Betätigung dieses Ventils (26) die Radbremse (32) mit einem Fluid-Expander (60) verbindet,
- einer Pumpe (50), deren ABS-gesteuerte Betätigung Fluid aus dem Fluid-Expander (60) durch das unbetätigte Druckminderungs-Elektroventil (26) in die Radbremse (32) fördert,
- einem Antischlupf-Elektroventil (18), das an der Einlaßseite des Druckminderungs-Elektroventils (26) angeordnet ist und den Hauptbremszylinder (10) mit der Radbremse (32) verbindet, wobei
- eine ASR-gesteuerte Betätigung des Antischlupf-Elektroventils (18) eine Verbindung zwischen dem Hauptbremszylinder (10) und einer Saugöffnung (52) der ASR-gesteuerten Pumpe (50) herstellt, und wobei der Pumpenausgang (56) mit der Verbindung vom Hauptbremszylinder (10) und Radbremse (32) zwischen dem Antischlupf-Elektroventil (18) und dem Druckminderungs-Elektroventil (26) verbunden ist,
dadurch gekennzeichnet, daß als Antischlupf-Elektroventil (18) die Ventilanordnung nach einem der Ansprüche 1 - 9 vorgesehen ist, wobei
- der erste Fluidanschluß (16) mit dem Hauptbremszylinder verbunden ist,
- der zweite Fluidanschluß (20) mit der Einlaßseite des Druckminderungs-Elektroventils (26), und
- der dritte Fluidanschluß (46) mit der Saugseite (52) der Pumpe (50) und dem Fluid-Expander (60).

## Claims

1. A valve arrangement, particularly for a fluid brake circuit with anti-slip control, comprising
- a first, a second and a third fluid connection (16, 20, 46) of respective, predetermined flow cross-sections,
- at least one valve element (44, 94, 96) which is biased by a first spring arrangement (106) in a first position in which the first and second fluid connections (16, 20) are communicating via a flow path and the third fluid connection (46) is closed, and
- a valve actuating means (42, 78) including an electromagnet arrangement (42) by which the valve element (44, 94, 96) can be moved in order to assume a second position in which the first and third fluid connections (16, 46) are communicating via a flow path and the second fluid connection (20) is closed, wherein in the second position of the valve element (44, 94, 96)
- the bias exerted by the first spring arrangement (106) onto the valve element (44, 94, 96) and
- the flow cross-sections of the fluid connections (16, 20, 46) are so dimensioned, as well as
- the electromagnetic force adjustably exerted by the valve actuating means onto the valve element is so determined
- that with a predetermined fluid pressure at the second fluid connection (20) the valve element (44) opens the second fluid connection (20) to such an extent that a flow path is obtained to the first and third fluid connections (16, 46),
characterized in that
the valve element is formed of two balls (94, 96) of different diameters (D1, D2), the second fluid connection (20) is in fluid communication with a valve seat (110) of the smaller ball (96), and the third fluid connection (46) is in fluid communication with a valve seat (98) of the larger ball (96);
the valve seat (98) of the ball (94) having the larger diameter (D2) has a larger free diameter than the valve seat (110) of the ball (96) having the smaller diameter (D1), and
the valve actuating means (42, 78) and the two balls (94, 96) are coaxially aligned with respect to each other.

2. A valve arrangement according to Claim 1, characterized in that the electromagnet arrangement (42) is formed by at least one excitation winding (70) which is connected with an iron core (74) which, via an adjustable air gap s_{L} cooperates with an armature element (78, 80) through which the valve element (44) can be moved.

3. A valve arrangement according to claim 2, characterized in that upon the excitation of the electromagnet arrangement (42), the variation of the air gap s_{L} occurs in a range in which the generated magnetic force changes at least approximately linearly.

4. A valve arrangement according to any of the previous claims, characterized in that the electromagnet arrangement (42) can be operated in the magnetic saturation.

5. A valve arrangement according to claim 2, characterized in that at least a section of the air gap s_{L} of the electromagnet arrangement (42) has a step-like cross-sectional shape.

6. A valve arrangement according to any one of the previous claims, characterized in that the resilient bias of the valve element (44), the force that can be applied to the valve element (44) by the valve actuating means (42), and the flow cross-sections of the fluid connections (16, 20, 46) are so dimensioned that in the second position of the valve element with a pressure difference of approx. 60 bar between the second (20) and the first or third fluid connection (16, 46), a flow path is obtained to the first and the third fluid connection (16, 46).

7. A valve arrangement according to the previous claim, characterized in that the valve actuating means (42, 78) is applied to the ball (94) with the greater diameter D2.

8. A valve arrangement according to any one of the previous claims, characterized in that the valve actuating means (42) is formed as a pot coil (79) with an iron core (74) and a plunger armature (78, 80).

9. A valve arrangement according to any one of the previous claims, characterized in that the valve actuating means (42, 78) is biased in the direction of the second position of the valve elemente (44) by a second spring arrangement (84), with the spring forces of the two spring arrangements (106, 84) being so dimensioned that with the unexcited valve actuating means the ball (94) with the greater diameter is not lifted off its valve seat (98).

10. A hydraulic vehicle braking system with a wheel antiblocking system (ABS) and a wheel anti-slip control (ASC), comprising
- a master cylinder (10) that can be actuated via a pedal (12),
- at least one wheel brake (32) and a pressure reducing electrovalve (26) via which the master cylinder (10) under normal conditions is connected with the wheel brake (32) and an ABS-controlled actuation of this valve (26) connects the wheel brake (32) with a fluid expander (60),
- a pump (50) the ABS-controlled actuation of which delivers fluid from the fluid expander (60) through the non-acutated pressure reducing electrovalve (26) into the wheel brake (32),
- an anti-slip electrovalve (18) which is arranged at the inlet side of the pressure reducing electrovalve (26) and connects the master cylinder (10) with the wheel brake (32), wherein
- an ASC-controlled actuation of the anti-slip solenoid valve (18) provides for the connection of the master cylinder (10) with a suction opening (52) of the ASC-controlled pump (50), and wherein the pump outlet (56) is connected with the connection of master brake cylinder (10) and wheel brake (32) between the anti-slip electrovalve (18) and the pressure reducing electrovalve (26),
characterized in that the valve arrangement according to one of Claims 1 through 9 is provided as the anti-slip electrovalve (18), wherein
- the first fluid connection (16) is connected with the master brake cylinder,
- the second fluid connection (20) is connected with with the inlet side of the pressure reducing electrovalve (26), and
- the third fluid connection (46) is connected with the suction side (52) of the pump (50) and the fluid expander (60).

## Revendications

1. Système de soupapes, en particulier pour un circuit de freins hydraulique pourvu d'un système antipatinage, comprenant
- un premier, un second et un troisième raccords hydrauliques (16, 20, 46) ayant des sections de passages respectives prédéterminées,
- au moins un élément de soupape (44, 94, 96) qui est précontraint dans une première position par un premier système élastique (106), dans laquelle le premier et le second raccords hydrauliques (16, 20) sont en communication hydraulique et le troisième raccord hydraulique (46) est ferme, et
- un moyen d'actionnement de soupape (42, 78) présentant un système d'électroaimant (42) pouvant déplacer l'élément de soupape (44, 94, 96) et pouvant amener ce dernier dans une seconde position dans laquelle le premier et le troisième raccords hydrauliques (16, 46) sont en communication hydraulique et le second raccord hydraulique (20) est fermé, dans lequel dans la seconde position de l'élément de soupape (44, 94, 96)
- la précontrainte exercée sur l'élément de soupape (44, 94, 96) par le premier système élastique (106) et
- les sections de passage des raccords hydrauliques (16, 20, 46) ont des grandeurs telles et
- la force électromagnétique réglable exercée par le moyen d'actionnement de soupape sur l'élément de soupape est déterminée de telle façon
- que lorsqu'une pression de fluide prédéterminée est atteinte au second raccord hydraulique (20) l'élément de soupape (44) ouvre suffisamment le second raccord hydraulique (20) pour qu'une communication hydraulique vers le premier et le troisième raccords hydrauliques (16, 46) ait lieu, caractérisé en ce que
l'élément de soupape est formé de deux billes (94, 96) de diamètres différents (D1, D2), le second raccord hydraulique (20) est relié hydrauliquement à un siège de soupape (110) de la plus petite bille (96) et le troisième raccord hydraulique (46) est relié hydrauliquement à un siège de soupape (98) de la plus grosse bille (94);
le siège de soupape (98) de la bille (94) ayant le plus grand diamètre (D2) présente un diamètre de passage plus grand que celui du siège de soupape (110) de la bille (96) ayant le plus petit diamètre (D1), et
le moyen d'actionnement de soupape (42, 78) et les deux billes (94, 96) sont tous sur un même axe.

2. Système de soupapes selon la revendication 1, caractérisé en ce que le système d'électroaimant (42) est formé d'au moins un enroulement d'excitation (70) qui est relié à un noyau de fer (74) qui coopère par l'intermédiaire d'un entrefer variable s_{L} avec un élément d'induit (78, 80) par lequel l'élément de soupape (44) peut être déplacé.

3. Système de soupapes selon la revendication 2, caractérisé en ce que lors de l'excitation du système d'électroaimant (42) la modification de l'entrefer s_{L} a lieu dans une plage dans laquelle la force magnétique engendrée varie au moins approximativement linéairement.

4. Système de soupapes selon l'une quelconque des revendications précédentes, caractérisé en ce que le système d'électroaimant (42) peut être exploité en saturation magnétique.

5. Système de soupapes selon la revendication 2, caractérisé en ce que l'entrefer s_{L} du système d'électroaimant (42) présente au moins partiellement une configuration en coupe étagée.

6. Système de soupapes selon l'une quelconque des revendications précédentes, caractérisé en ce que la précontrainte élastique de l'élément de soupape (44), la force pouvant être exercée sur l'élément de soupape (44) par le moyen d'actionnement de soupape (42) et les sections de passage des raccords hydrauliques (16, 20, 46) ont des grandeurs telles que dans la seconde position de l'élément de soupape et lors d'une différence de pression d'environ 60 bars entre le second (20) et le premier ou le troisième raccord hydraulique (16, 46) une communication hydraulique vers le premier et le troisième raccord hydraulique (16, 46) ait lieu.

7. Système de soupapes selon l'une quelconque des revendications précédentes, caractérisé en ce que le moyen d'actionnement de soupape (42, 78) agit sur la bille (94) de plus grand diamètre D2.

8. Système de soupapes selon l'une quelconque des revendications précédentes, caractérisé en ce que le moyen d'actionnement de soupape (42) est une bobine pour noyau en pot (79) à noyau en fer (74) et possédant un noyau plongeur (78, 80).

9. Système de soupapes selon l'une quelconque des revendications précédentes, caractérisé en ce que le moyen d'actionnement de soupape (42, 78) est précontraint par un second système élastique (84) en direction de la seconde position de l'élément de soupape (44), les forces élastiques des deux systèmes élastiques (106, 84) ayant des intensités telles que lorsque le moyen d'actionnement de soupape n'est pas excité la bille (94) présentant le plus grand diamètre D2 ne se soulève pas de son siège.

10. Système hydraulique de freinage de véhicule pourvu d'un système antiblocage (ABS) et d'un système antipatinage (ASR), comprenant
- un maître cylindre de frein (10) pouvant être actionné par une pédale (12),
- au moins un frein de roue (32) et une soupape électromagnétique de réduction de pression (26), par l'intermédiaire de laquelle le maître cylindre de frein (10) est en communication à l'état normal avec le frein de roue (32), et un actionnement de cette soupape (26) commandé par ABS qui fait communiquer le frein de roue (32) avec un expanseur de fluide (60),
- une pompe (50) dont le fluide d'actionnement commandé par ABS alimente en fluide provenant de l'expanseur de fluide (60) le frein de roue (32),
- une soupape électromagnétique antipatinage (18) qui est disposée du côté de l'admission de la soupape électromagnétique de réduction de pression (26) et relie le maître cylindre de frein (10) avec le frein de roue (32), dans lequel
- un actionnement commandé par ASR de la soupape électromagnétique antipatinage (18) relie le maître cylindre (10) et une ouverture d'aspiration (52) de la pompe commandée par ASR (50), et dans lequel la sortie de pompe (56) est reliée à la communication du maître cylindre (10) et du frein de roue (32) entre la soupape électromagnétique antipatinage (18) et la soupape électromagnétique de réduction de pression (26),
caractérisé en ce que la soupape électromagnétique antipatinage (18) est le système de soupapes selon l'une quelconque des revendications 1 à 9, dans lequel
- le premier raccord hydraulique (16) est relié au maître cylindre,
- le second raccord hydraulique (20) est relié au côté d'admission de la soupape électromagnétique de réduction de pression (26), et
- le troisième raccord hydraulique (46) est relié au côté d'aspiration (52) de la pompe (50) et à l'expanseur de fluide (60).
